# FASCICULE DE BREVET EUROPEEN

(11) **EP 4 436 798 B1**
(45) Date de publication et mention de la délivrance du brevet: **21.01.2026**
(21) Numéro de dépôt: 22822368.1
(22) Date de dépôt: 24.11.2022
(51) Int. Cl.: B60C 15/00, B60C 15/04, B60C 15/06

(54) **PNEUMATIQUE PRESENTANT DES PERFORMANCES EN TERMES DE RESISTANCE AU ROULEMENT AMELIOREES**
REIFEN MIT VERBESSERTER ROLLWIDERSTANDSLEISTUNG
TYRE WITH IMPROVED ROLLING RESISTANCE PERFORMANCE

(30) Priorité: 25.11.2021 FR 2112517
(43) Date de publication de la demande: 02.10.2024
(73) Titulaire: COMPAGNIE GENERALE DES ETABLISSEMENTS MICHELIN, 63000 Clermont-Ferrand (FR)
(72) Inventeur: BESTGEN, Luc, 63040 CLERMONT-FERRAND CEDEX 09 (FR); THIEL, Baptiste, 63040 CLERMONT-FERRAND CEDEX 09 (FR); CROCHET, Aurore, 63040 CLERMONT-FERRAND CEDEX 09 (FR)
(74) Mandataire: M.F.P. Michelin
(86) Numéro de dépôt international: PCT/EP2022/083161
(87) Numéro de publication internationale: WO 2023/094541

(56) Documents cités:
- WO-A1-2019/197769
- WO-A1-2021/126187
- FR-A1- 2 386 425
- JP-A- H06 328 914
- US-A1- 2020 384 811

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones du bourrelet du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemple décrites dans les documents FR 2779387 ou US 2006/0000199 ou encore GB 2 065 573.

La présence de ces couches d'éléments de renforcement ou raidisseurs contribuent à épaissir la zone du bourrelet jusqu'au bas de 1a zone du flanc en direction de la zone du pneumatique où celui-ci présente sa largeur axiale la plus importante. Ce profil du pneumatique semble pouvoir générer des fragilités du pneumatique au regard de certains type de chocs dans des conditions particulières d'utilisation.

Afin de réduire les risques d'endommagement des pneumatiques liés aux frottements sur les bordures de trottoirs il est connu, notamment des documents WO 2020/012122 et WO 2020/012121, de proposer des pneumatiques présentant dans la zone du bourrelet une partie en renfoncement conduisant en outre à un allègement du pneumatique.

Les inventeurs ont toutefois mis en évidence que dans des conditions de roulage particulièrement sévères notamment en termes de charge et/ou pression de gonflage, les performances en termes de résistance au roulement n'étaient pas au niveau espéré au regard de cet allègement du pneumatique.

Le document WO2021/126187 décrit encore une zone de bourrelet d'un pneumatique poids-lourd dans laquelle les mélanges de remplissages présentent différentes rigidités.

Les inventeurs se sont ainsi donnés pour mission de fournir des pneumatiques pour véhicules "Poids-Lourds", dont les performances d'endurance notamment l'endurance des zones des bourrelets sont conservées, dont les performances d'usure de la zone des bourrelets sont satisfaisantes et dont la conception permet d'améliorer les performances en termes de résistance au roulement.

Ce but a été atteint selon l'invention par un pneumatique comprenant une armature de carcasse radiale, constituée d'une couche d'armature de carcasse formée d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement d'armature de carcasse étant renforcé par au moins une couche d'éléments de renforcement ou raidisseur, une première couche de mélange(s) polymérique(s) étant au moins en partie axialement intérieure à l'extrémité dudit retournement de la couche d'armature de carcasse, une deuxième couche de mélange(s) polymérique(s) étant au moins en partie axialement extérieure à l'extrémité radialement extérieure dudit raidisseur, une troisième couche de mélange(s) polymérique(s) formant la surface extérieure du pneumatique dans la zone du bourrelet, ladite troisième couche de mélange(s) polymérique(s) étant destinée notamment à venir au contact de la jante, ladite troisième couche de mélange(s) polymérique(s) étant radialement vers l'extérieur au contact d'une quatrième couche de mélange(s) polymérique(s) formant la surface extérieure d'un flanc, le raidisseur étant axialement séparé du retournement de la couche d'armature de carcasse par une cinquième couche de mélange(s) polymérique(s), l'épaisseur de mélange(s) polymérique(s) constituée de la troisième et/ou de la quatrième couche de mélange(s) polymérique(s) formant la surface extérieure du pneumatique, mesurée radialement à l'extérieur du point le plus radialement intérieur de la tringle, étant supérieure ou égale à 2 mm, et dans une coupe méridienne dudit pneumatique,
- une sixième couche de mélange(s) polymérique(s) occupant au moins une zone radialement intérieure à l'extrémité du retournement de la couche d'armature de carcasse et radialement extérieure à la tringle, ladite zone étant axialement comprise entre le retournement de la couche d'armature de carcasse et la partie principale de la couche d'armature de carcasse,
- la sixième couche de mélange(s) polymérique(s) étant distante de l'extrémité du retournement de la couche d'armature de carcasse d'au moins 1.5 mm,
la valeur maximale de tan(δ), noté tan(δ)max, mesurée à 60°C, de la sixième couche de mélange(s) polymérique(s) étant inférieure à 0.050 et le taux de linéarité du module complexe de cisaillement dynamique G*, à une température de 23°C, de la sixième couche de mélange(s) polymérique(s) étant supérieur à 0.80, le taux de linéarité étant défini par le ratio de G*ₘᵢₙ sur G*ₘₐₓ, avec
- G*ₘᵢₙ étant la valeur minimale du module complexe de cisaillement dynamique G* pour une déformation de 1 à 100%, et
- G*ₘₐₓ étant la valeur maximale du module complexe de cisaillement dynamique G* pour une déformation de 1 à 100%.

La coupe méridienne du pneumatique est définie conformément à l'invention telle que les barycentres des tringles forment une droite orientée axialement, lesdits barycentres étant distants l'un de l'autre d'une distance égale à la largeur de la jante nominale J augmentée de 20 mm et diminuée de deux fois la distance mesurée axialement entre un barycentre d'une tringle et un point de la surface extérieure du pneumatique.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 60°C. On effectue un balayage en amplitude de déformation de 0,1 à 100% (cycle aller), puis de 100% à 1% (cycle retour). Les résultats exploités sont le module complexe de cisaillement dynamique (G*) et le facteur de perte tan(δ) mesuré sur le cycle retour. Pour le cycle retour, on indique la valeur maximale de tan(δ) observée, noté tan(δ)ₘₐₓ. Pour la mesure du module complexe de cisaillement dynamique (G*) selon l'invention, la sollicitation sinusoïdale en cisaillement simple alterné, à la fréquence de 10Hz, est opérée à une température de 23°C.

Au sens de l'invention, ladite au moins une couche d'éléments de renforcement ou raidisseur est constituée d'éléments de renforcement métalliques ou textiles. Selon un premier type de réalisation, l'extrémité radialement la plus intérieure de ladite au moins une couche d'éléments de renforcement ou raidisseur est radialement extérieure au point radialement le plus intérieur de la tringle. Selon un deuxième type de réalisation, l'extrémité radialement la plus intérieure de ladite au moins une couche d'éléments de renforcement ou raidisseur est radialement intérieure au point radialement le plus intérieur de la tringle. Selon un troisième type de réalisation, ladite au moins une couche d'éléments de renforcement ou raidisseur est enroulée autour de la tringle de sorte que l'une de ses extrémités est axialement intérieure à 1a partie principale de la couche d'armature de carcasse.

Au sens de l'invention, les six couches de mélange(s) polymérique(s) correspondent à des volumes et doivent être comprises comme pouvant être réalisées à partir d'un ou plusieurs mélanges polymériques associés pour constituer ces volumes. Ces associations peuvent être réalisées selon des directions axiale et/ou radiale. Industriellement, les six couches polymériques correspondent à des semi-finis préalablement préparés à la fabrication du pneumatique. Lorsqu'une telle couche est constituée de plusieurs mélanges polymériques comme énoncés ci-dessus, ces mélanges polymériques peuvent constituer chacun un semi-fini ou bien être préalablement associés pour ne former qu'un seul semi-fini, alors avantageusement réalisé par des techniques de coextrusion permettant d'associer les différents mélanges polymériques.

La sixième couche de mélange(s) polymérique(s) s'étend axialement intérieurement au retournement de la couche d'armature de carcasse, au contact de la première couche de mélange(s) polymérique(s) et/ou du retournement de la couche d'armature de carcasse.

Les essais ont montré que les pneumatiques ainsi réalisés selon l'invention présentent des performances en termes de résistance au roulement nettement supérieures à celles de pneumatiques de conception plus usuelle ainsi qu'en comparaison de pneumatiques présentant des zones du bourrelet creusées et, donc allégés. Par ailleurs les pneumatiques selon l'invention présentent des performances d'usure due aux chocs et/ou frottements sur les bordures de trottoir lors de roulages usuels satisfaisantes et présentent des performances en termes d'endurance, et notamment en termes d'endurance des zones des bourrelets, au moins aussi bonnes que celles des pneumatiques de conception plus usuelle.

Les inventeurs ont mis en évidence que les pneumatiques réalisés conformément à l'invention et qui présentent une zone du bourrelet de forme usuelle et une couche de mélange(s) polymérique(s) formant la surface extérieure du pneumatique de composition usuelle permet d'obtenir des performances en termes d'usure suffisantes pour des usages usuels.

De manière surprenante également, les inventeurs ont mis en évidence que les pneumatiques selon l'invention sont plus performants en termes de résistance au roulement que les pneumatiques tels que ceux décrits précédemment présentant une zone évidée dans la zone du bourrelet, malgré l'allègement de ces derniers.

Les inventeurs pensent interpréter ce résultat concernant la résistance au roulement du fait que l'allégement lié à la partie évidée de la zone du bourrelet des pneumatiques précédemment décrits autorise une flexion plus importante de cette partie du pneumatique lors de son utilisation, notamment dans des conditions extrêmes soit en termes de charge portée soit en termes de pression de gonflage, et donc des déformations de certaines parties du pneumatique plus importantes que dans le cas des pneumatiques de conception plus usuelle ou bien que dans le cas des pneumatiques selon l'invention.

En comparaison d'un pneumatique de conception plus usuel, ne comportant pas de partie évidée dans la zone du bourrelet, le taux de linéarité du module complexe de cisaillement dynamique G* relativement élevé de la sixième couche, en comparaison de celui des mélanges polymériques constitutifs des pneumatiques plus usuels, conduit à des dissipations thermiques inférieures à celles desdits mélanges polymériques et donc des phénomènes hystérétiques plus faibles. Les inventeurs pensent interpréter cela du fait de la déformation du pneumatique au niveau de la sixième couche qui est relativement grande et imposée par la déformation du pneumatique qui vient en appui sur le bord de la jante lors du passage dans l'aire de contact en roulage. L'effet Payne moins important pour le mélange constitutif de la sixième couche selon l'invention que pour lesdits mélanges polymériques constitutifs des pneumatiques plus usuels semble pouvoir contribuer à des dissipations thermiques plus faibles du fait de propriétés hystérétiques diminuées lors d'un cycle de déformations au tour de roue, les déformations étant faibles à l'opposé de l'aire de contact et fortes dans l'aire de contact. L'effet Payne conduit par ailleurs les inventeurs à penser que la plus faible rigidité à faible déformation du mélange constitutif de la sixième couche selon l'invention, sans modifier la rigidité à forte déformation, liée au taux de linéarité du module complexe de cisaillement dynamique G* relativement élevé, n'a pas de conséquence sur les propriétés d'endurance du pneumatique au vu du choix de l'emplacement de la sixième couche.

Selon un mode de réalisation préféré de l'invention, la cinquième couche de mélange(s) polymérique(s) située axialement entre le retournement de la couche d'armature de carcasse et le raidisseur présente un module sécant d'élasticité à 10 % d'allongement supérieur à 6 MPa et de préférence supérieur à 9 MPa.

En ce qui concerne les mélanges polymériques, tels que les compositions de caoutchouc, le module sécant d'élasticité à 10 % d'allongement est le module élastique du mélange mesuré lors d'une expérience de traction uniaxiale, à une valeur d'allongement de 0.1 (soit 10% d'allongement, exprimé en pourcentage). On impose une vitesse constante de traction uniaxiale à l'éprouvette, et on mesure son allongement et l'effort. La mesure est réalisée à l'aide d'une machine de traction de type INSTRON, à une température de 23°C, et une humidité relative de 50% (Norme ISO 23529). Les conditions de mesurage et d'exploitation des résultats pour déterminer l'allongement et la contrainte sont tels que décrits dans la norme NF ISO 37: 2012-03. On détermine la contrainte pour un allongement de 0.1 et on calcule le module sécant d'élasticité à 10 % d'allongement en faisant le rapport de cette valeur de contrainte sur la valeur d'allongement. L'homme du métier saura choisir et adapter les dimensions de l'éprouvette en fonction de la quantité de mélange accessible et disponible en particulier dans le cas de prélèvements d'éprouvette dans un produit fini tel que le pneumatique.

Selon un autre mode préféré de l'invention, le mélange polymérique présent dans un cercle centré sur l'extrémité du retournement de l'armature de carcasse et présentant un rayon d'au moins 1.5 mm présente un module sécant d'élasticité à 10 % d'allongement supérieur à 6 MPa et de préférence supérieur à 9 MPa.

Selon l'un ou l'autre de ces modes de réalisation préféré de l'invention, le choix de mélanges polymériques, dont le module sécant d'élasticité à 10 % d'allongement est supérieur à 6 MPa et de préférence supérieur à 9 MPa, contribue à une augmentation de la rigidité de la zone du bourrelet qui vient compenser la faible rigidité à faible déformation du sixième mélange polymérique, notamment lors d'une sollicitation de type freinage important.

Ces deux modes de réalisations préférés de l'invention peuvent encore avantageusement être réalisés simultanément.

Selon une variante de réalisation avantageuse de l'invention, l'extrémité radialement la plus extérieure du raidisseur est radialement extérieure à l'extrémité du retournement de la couche d'armature de carcasse. Une telle réalisation permet d'une part d'éviter la coïncidence des extrémités respectives du raidisseur et du retournement de la couche d'armature de carcasse, lesdites extrémités étant radialement décalées. D'autre part le raidisseur assure ainsi pleinement une fonction de protection du retournement de la couche d'armature de carcasse notamment au regard du contact avec le crochet de jante et des appuis sur celui-ci lorsque le pneumatique est en roulage.

Selon d'autres modes de réalisation, l'extrémité radialement la plus extérieure du raidisseur est radialement intérieure à l'extrémité du retournement de la couche d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Selon un mode de réalisation de l'invention, notamment pour améliorer encore les performances en termes d'endurance du pneumatique, l'armature de carcasse est formée de câbles dont la structure est fortement pénétrée de mélanges polymériques. Il peut par exemple s'agir de câbles dont la construction permet d'augmenter leur pénétrabilité par les mélanges polymériques. Il peut encore s'agir de câbles dans lesquels des mélanges polymériques sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

De tels câbles de l'armature de carcasse présentant des taux de pénétration plus élevés qu'habituellement, peuvent permettre au pneumatique d'encore mieux répartir dans la longueur la déformation en évitant les concentrations locales conduisant à de petits rayons de courbure.

En effet, les câbles de l'armature de carcasse, ainsi définis selon l'invention, qui sont soumis à des phénomènes de flexion importante notamment lors des chocs sur les trottoirs peuvent présenter une meilleure résistance à ces phénomènes de flexion du fait de leur taux de pénétration par les mélanges caoutchouteux qui induit une meilleure homogénéité de déformation entre les zones du câble en extension et en compression dues à la flexion.

Selon une variante de réalisation de l'invention, l'armature de sommet du pneumatique est formée d'au moins deux couches de sommet de travail d'éléments de renforcement avantageusement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

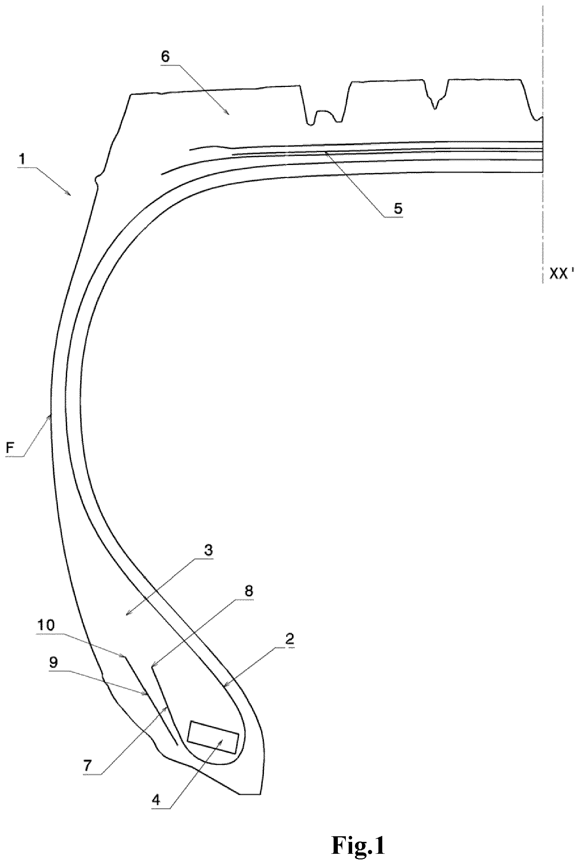

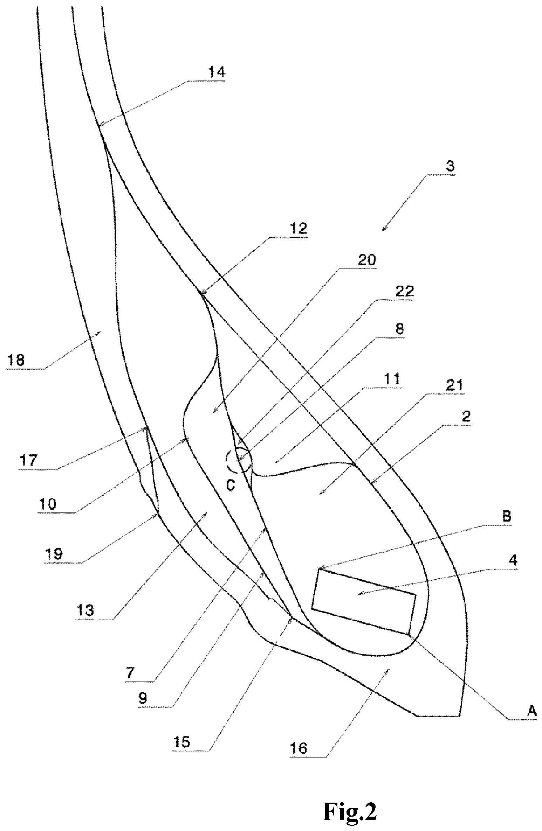

D'autres détails et caractéristiques avantageux de l'invention ressortiront ci-après de la description des exemples de réalisation de l'invention notamment en référence aux figures 1 et 2 qui représentent :
- figure 1, une vue méridienne d'un schéma d'un pneumatique selon l'invention,
- figure 2, une représentation schématique de la zone d'un bourrelet selon l'invention.

Les figures ne sont pas représentées à l'échelle pour en simplifier la compréhension.

La figure 1 ne représente qu'une demi-vue d'un pneumatique qui se prolonge de manière symétrique par rapport à l'axe XX' qui représente le plan médian circonférentiel, ou plan équatorial, du pneumatique.

Sur la figure 1, le pneumatique 1 est de dimension 315/70 R 22.5. Ledit pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement 7 de la couche d'armature de carcasse présentant une extrémité 8.

Axialement à l'extérieur du retournement 7, on trouve un raidisseur 9 dont l'extrémité radialement la plus extérieure 10 est radialement extérieure à l'extrémité 8 du retournement 7 de la couche d'armature de carcasse.

La coupe méridienne est définie de sorte que les barycentres des tringles 4 forment une droite orientée axialement, lesdits barycentres étant distants l'un de l'autre d'une distance égale à la largeur de la jante nominale augmentée de 20 mm et diminuée de deux fois la distance mesurée axialement entre un barycentre d'une tringle 4 et un point de la surface extérieure du pneumatique.

Sur la figure 2, le retournement 7 de la couche d'armature de carcasse est séparé partiellement de la partie principale de la couche d'armature de carcasse 2 par une première couche de mélange polymérique 11, présentant une extrémité radialement extérieure 12 radialement extérieure aux extrémités du raidisseur 9 et du retournement 7 de la couche d'armature de carcasse.

Conformément à l'invention, une sixième couche de mélange polymérique 21 est axialement positionnée entre le retournement 7 de la couche d'armature de carcasse et la partie principale de la couche d'armature de carcasse, ladite sixième couche de mélange polymérique 21 étant radialement intérieure à l'extrémité 8 du retournement 7 de la couche d'armature de carcasse et distante radialement de cette extrémité 8 d'au moins 1.5 mm. Pour maintenir la couche de mélange polymérique 21 à distance de l'extrémité 8 du retournement 7 de la couche d'armature de carcasse, l'extrémité 8 du retournement 7 de la couche d'armature de carcasse est recouverte d'une couche de mélange polymérique 22, bordant l'extrémité 8 du retournement 7 de la couche d'armature de carcasse et positionnée axialement à l'intérieur du retournement 7 de la couche d'armature de carcasse. Selon ce mode de réalisation de l'invention, la sixième couche de mélange polymérique 21 se substitue au moins en partie à la première couche de mélange polymérique 11, la couche de mélange polymérique 22 pouvant s'apparenter à une partie de la première couche de mélange polymérique 11.

La présence de la couche de mélange polymérique 22 permet de concevoir le pneumatique avec un ou plusieurs mélanges polymériques, présents dans un cercle C centré sur l'extrémité 8 du retournement 7 de la couche d'armature de carcasse et présentant un rayon d'au moins 1.5 mm, qui présentent un module sécant d'élasticité à 10 % d'allongement supérieur à 6 MPa, la sixième couche de mélange polymérique 21 étant située en dehors de ce cercle C.

La sixième couche de mélange polymérique 21 est profilée pour venir en appui sur la tringle 4, et assurer en coopération avec la première couche de mélange polymérique 11 un découplage entre le retournement 7 de la couche d'armature de carcasse et la partie principale de la couche d'armature de carcasse 2.

Axialement à l'extérieur du raidisseur 9 est représentée la deuxième couche de mélange polymérique 13 dont l'extrémité radialement extérieure 14 est radialement extérieure à l'extrémité 12 de la première couche de mélange polymérique 11. L'extrémité radialement intérieure 15 de la deuxième couche de mélange polymérique 13 est radialement comprise entre les points A et B, respectivement radialement le plus intérieur et radialement le plus extérieur de la tringle 4.

Au contact de la deuxième couche de mélange polymérique 11 et radialement sous 1a tringle 4, on trouve la troisième couche de mélange polymérique 16, dont l'extrémité radialement la plus extérieure 17 est radialement intérieure à l'extrémité 12 de la deuxième couche de mélange polymérique 11 et radialement extérieure à l'extrémité 10 du raidisseur 9.

Axialement au contact de la deuxième couche de mélange polymérique 13, et de la troisième couche de mélange polymérique 16, se trouve la quatrième couche de mélange polymérique 18. L'extrémité radialement intérieure 19 de la quatrième couche de mélange polymérique 18 est radialement intérieure à l'extrémité 17 de la troisième couche de mélange polymérique 16 et radialement intérieure aux extrémités 10 du raidisseur 9 et 8 du retournement 7 de la couche d'armature de carcasse.

La troisième couche de mélange polymérique 16 et la quatrième couche de mélange polymérique 18 forment la surface extérieure du pneumatique 1 dans la zone du bourrelet 3 du pneumatique.

Une cinquième couche de mélange polymérique 20 est partiellement présente axialement entre le raidisseur 9 et le retournement 7 de la couche d'armature de carcasse.

Dans cet exemple de réalisation, pour conserver des propriétés d'endurance quelles que soient les conditions de roulage, la cinquième couche de mélange polymérique 20, axialement entre le raidisseur 9 et le retournement 7 de la couche d'armature de carcasse et la couche de mélange polymérique 22 sont réalisées avec un mélange polymérique présentant un module sécant d'élasticité à 10 % d'allongement supérieur à 6 MPa.

Les différents mélanges polymériques utilisés pour réaliser les six couches de mélange(s) polymérique(s) sont listés ci-après, en exprimant pour chacun le module d'élasticité sous tension à 10 % d'allongement ainsi que les valeurs tan(δ)ₘₐₓ et le taux de linéarité G*. Les taux des différents constituants des compositions présentées dans le tableau suivant sont exprimés en pce.

| | Première couche | deuxième couche | troisième couche | quatrième couche | cinquième couche | sixième couche |
|---|---|---|---|---|---|---|
| **NR** | **100** | **100** | **75** | **50** | **100** | **100** |
| **BR** | | | **25** | **50** | | |
| **Noir N347** | **30** | | | | | |
| **Noir N330** | | **40** | | | | |
| **Noir N375** | | | **65** | | | |
| **Noir N234** | | | | **35** | | |
| **Noir N326** | | | | | **60** | |
| **Noir N550** | | | | | | **17.5** |
| **Acide stéarique** | **0.5** | **0.5** | **3** | **1** | **0.5** | **1** |
| **Oxyde de zinc** | **5** | **3.5** | **4** | **2.5** | **9** | **5** |
| **Huile MES/HPD** | | | | **10** | | |
| **Résine TAC OPF** | | | **1** | | | |
| **WAX 7132** | | | **1** | **1.5** | | |
| **Sol Soufre 2H** | | | **1** | **1.5** | | |
| **Soufre insol 20H** | 3 | 3 | | | 8 | 4 |
| **Accélérateur CBS** | 1 | 0.5 | 1.5 | 1 | | 1.5 |
| **Accélérateur DCBS** | | | | | 1 | |
| **Sel de cobalt** | | | | | 2 | |
| tan(δ)ₘₐₓ 60°C | **0.06** | **0.08** | **0.24** | **0.12** | **0.13** | **0.02** |
| G*min (MPa) 23°C | **1.02** | **1.04** | **2.08** | **0.78** | **2.4** | **0.91** |
| G*max (MPa) 23°C | **1.76** | **2.05** | **18.41** | **1.82** | **10.6** | **1.03** |
| Taux de Linéarité G* 23°C | **0.58** | **0.51** | **0.11** | **0.43** | **0.23** | **0.88** |
| MA₁₀(MPa) | **3.5** | **3.3** | **7** | **2.7** | **10** | **3.1** |

Le mélange polymérique utilisé pour la couche 22 est identique au mélange de la cinquième couche.

Des essais ont été réalisés avec des pneumatiques I selon l'invention conçus respectivement conformément à la figure 2.

Les pneumatiques selon l'invention sont comparés d'une part à des pneumatiques de référence R1 de conception plus usuelle. Ces pneumatiques sont semblables à la représentation de la figure 1, la sixième couche de mélange polymérique n'existant pas.

D'autre part, ils sont comparés à des pneumatiques de référence R2, la sixième couche de mélange polymérique étant également absente et les pneumatiques de référence R2 présentant une zone du bourrelet évidée tel que décrit dans la demande de brevet WO 2020/012122.

Les essais ont été réalisés pour les pneumatiques selon l'invention avec des conditions identiques à celles appliquées aux pneumatiques de référence R1 et R2.

Des premiers essais d'endurance ont été réalisés en faisant rouler deux pneus rabotés l'un sur l'autre avec une pression régulée de 8.5b, et une charge de 7061 daN à une vitesse de 30 km/h et à une température ambiante de 15°C pendant 20000 km.

Les pneumatiques selon l'invention présentent des résultats sensiblement identiques à ceux des pneumatiques de référence R1 et R2.

D'autres essais ont été menés pour tester les performances de résistance aux chocs et/ou frottements sur des bordures de trottoir.

Les pneumatiques de référence R2 présentent de meilleures performances dans des conditions extrêmes. Les pneumatiques selon l'invention présentent quant à eux des résultats sensiblement identiques aux pneumatiques de référence R1.

Par ailleurs, des mesures de résistance au roulement ont été réalisées.

Les mesures de résistance au roulement ont été effectuées sur chacun des pneumatiques dans des conditions de roulage identiques selon le Règlement n° 117 de la Commission économique pour l'Europe des Nations unies (CEE-ONU). Les résultats des mesures sont exprimés en kg/t, une valeur de 100 étant attribuée au pneumatique P1. Des valeurs supérieures à 100 montrent de meilleures performances en résistance au roulement.

| | R1 | R2 | I1 |
|---|---|---|---|
| Résistance au roulement | 100 | 100 | 102 |

Il ressort de ces essais que les pneumatiques selon l'invention permettent d'améliorer les performances en termes de résistance au roulement satisfaisantes de manière satisfaisantes tout en présentant des performances en endurance et en résistance aux chocs satisfaisantes.

## Revendications

1. - Pneumatique (1), comprenant une armature de carcasse radiale (2), constituée d'une couche d'armature de carcasse formée d'éléments de renforcement, ledit pneumatique comprenant une armature de sommet (5), elle-même coiffée radialement d'une bande de roulement (6), ladite bande de roulement (6) étant réunie à deux bourrelets (3) par l'intermédiaire de deux flancs, 1a couche d'éléments de renforcement de l'armature de carcasse étant ancrée dans chacun des bourrelets par retournement autour d'une tringle (4) pour former une partie principale de 1a couche d'armature de carcasse s'étendant d'une tringle (4) à l'autre et un retournement (7) de 1a couche d'armature de carcasse (2) dans chacun des bourrelets (3), ledit retournement (7) d'armature de carcasse étant renforcé par au moins une couche d'éléments de renforcement ou raidisseur (9), une première couche de mélange(s) polymérique(s) (11) étant au moins en partie axialement intérieure à l'extrémité (8) dudit retournement (7) de 1a couche d'armature de carcasse, une deuxième couche de mélange(s) polymérique(s) (13) étant au moins en partie axialement extérieure à l'extrémité radialement extérieure (10) dudit raidisseur (9), une troisième couche de mélange(s) polymérique(s) (16) formant 1a surface extérieure du pneumatique dans la zone du bourrelet (3), ladite troisième couche de mélange(s) polymérique(s) (16) étant destinée notamment à venir au contact de 1a jante, ladite troisième couche de mélange(s) polymérique(s) (16) étant radialement vers l'extérieur au contact d'une quatrième couche de mélange(s) polymérique(s) (18) formant 1a surface extérieure d'un flanc, le raidisseur (9) étant axialement séparé du retournement (7) de la couche d'armature de carcasse par une cinquième couche de mélange(s) polymérique(s) (20), dans une coupe méridienne dudit pneumatique,
- une sixième couche de mélange(s) polymérique(s) (21) occupe au moins une zone radialement intérieure à l'extrémité (8) du retournement (7) de la couche d'armature de carcasse et radialement extérieure à 1a tringle (4), ladite zone étant axialement comprise entre le retournement (7) de 1a couche d'armature de carcasse et la partie principale de la couche d'armature de carcasse (2),
- la sixième couche de mélange(s) polymérique(s) (21) est distante de l'extrémité (8) du retournement (7) de la couche d'armature de carcasse d'au moins 1.5 mm,
ledit pneumatique étant **caractérisé en ce que** la valeur maximale de tan(δ), noté tan(δ)max, mesurée à 60°C selon la norme ASTM D 5992-96, de la sixième couche de mélange(s) polymérique(s) (21) est inférieure à 0.050 et **en ce que** le taux de linéarité du module complexe de cisaillement dynamique G*, à une température de 23°C, de 1a sixième couche de mélange(s) polymérique(s) (21) est supérieur à 0.80, le taux de linéarité étant défini par 1e ratio de G*min sur G*max, avec
- G*min étant la valeur minimale du module complexe de cisaillement dynamique G* pour une déformation de 1 à 100%, et
- G*max étant la valeur maximale du module complexe de cisaillement dynamique G* pour une déformation de 1 à 100%.

2. - Pneumatique (1) selon la revendication 1, **caractérisé en ce que** la cinquième couche de mélange(s) polymérique(s) (20) située axialement entre le retournement (7) de la couche d'armature de carcasse et le raidisseur (9) présente un module sécant d'élasticité à 10 % d'allongement supérieur à 6 MPa.

3. - Pneumatique (1) selon l'une des revendications 1 ou 2, **caractérisé en ce que** le mélange polymérique présent dans un cercle (C) centré sur l'extrémité (8) du retournement (7) de l'armature de carcasse et présentant un rayon d'au moins 1.5 mm présente un module sécant d'élasticité à 10 % d'allongement supérieur à 6 MPa.

4. - Pneumatique (1) selon l'une des revendications précédentes, **caractérisé en ce que** l'extrémité (10) radialement la plus extérieure du raidisseur (9) est radialement extérieure à l'extrémité (8) du retournement (7) de 1a couche d'armature de carcasse.

5. **-** Pneumatique (1) selon l'une des revendications précédentes, **caractérisé en ce que** les éléments de renforcement de la couche d'armature de carcasse (2) sont des câbles à au moins deux couches, au moins une couche interne étant gainée d'une couche constituée d'une composition de caoutchouc non réticulable, réticulable ou réticulée, de préférence à base d'au moins un élastomère diénique.

6. - Pneumatique (1) selon l'une des revendications précédentes, **caractérisé en ce que,** dans tout plan méridien, dans chaque bourrelet (3), le pneumatique (1) comporte une armature de contention entourant la tringle (4) et un volume de mélange caoutchouteux directement au contact de la tringle (4).

## Patentansprüche

1. Reifen (1), der eine radiale Karkassenbewehrung (2) beinhaltet, die aus einer Karkassenbewehrungslage besteht, die von Verstärkungselementen gebildet wird, wobei der Reifen eine Scheitelbewehrung (5) beinhaltet, die ihrerseits radial von einem Laufstreifen (6) bedeckt ist, wobei der Laufstreifen (6) über zwei Seitenwände mit zwei Wülsten (3) verbunden ist, wobei die Lage von Verstärkungselementen der Karkassenbewehrung in jedem der Wülste durch Umschlag um einen Wulstkern (4) verankert ist, um einen Hauptteil der Karkassenbewehrungslage, der sich von einem Wulstkern (4) zum anderen erstreckt, und einen umgeschlagenen Teil (7) der Karkassenbewehrungslage (2) in jedem der Wülste (3) zu bilden, wobei der umgeschlagene Teil (7) der Karkassenbewehrung durch mindestens eine Lage von Verstärkungselementen oder eine Versteifung (9) verstärkt wird, wobei sich eine erste Lage aus Polymermischung(en) (11) mindestens teilweise axial innerhalb des Endes (8) des umgeschlagenen Teils (7) der Karkassenbewehrungslage befindet, wobei sich eine zweite Lage aus Polymermischung (en) (13) mindestens teilweise axial außerhalb des radial äußeren Endes (10) der Versteifung (9) befindet, wobei eine dritte Lage aus Polymermischung(en) (16) die Außenoberfläche des Reifens im Bereich des Wulstes (3) bildet, wobei die dritte Lage aus Polymermischung(en) (16) insbesondere dazu bestimmt ist, mit der Felge in Kontakt zu kommen, wobei sich die dritte Lage aus Polymermischung(en) (16) radial nach außen in Kontakt mit einer vierten Lage aus Polymermischung(en) (18), die die Außenoberfläche einer Seitenwand bildet, befindet, wobei die Versteifung (9) durch eine fünfte Lage aus Polymermischung(en) (20) von dem umgeschlagenen Teil (7) der Karkassenbewehrungslage axial getrennt ist, in einem Meridianschnitt des Reifens
- nimmt eine sechste Lage aus Polymermischung(en) (21) mindestens einen Bereich radial innerhalb des Endes (8) des umgeschlagenen Teils (7) der Karkassenbewehrungslage und radial außerhalb des Wulstkerns (4) ein, wobei sich der Bereich axial zwischen dem umgeschlagenen Teil (7) der Karkassenbewehrungslage und dem Hauptteil der Karkassenbewehrungslage (2) befindet,
- ist die sechste Lage aus Polymermischung(en) (21) von dem Ende (8) des umgeschlagenen Teils (7) der Karkassenbewehrungslage mindestens 1,5 mm entfernt,
wobei der Reifen **dadurch gekennzeichnet ist,**
**dass** der maximale Wert von tan(δ), bezeichnet als tan(δ)max, gemessen bei 60 °C nach der Norm ASTM D 5992-96, der sechsten Lage aus Polymermischung(en) (21) kleiner als 0,050 ist und dass die Linearität des komplexen dynamischen Schermoduls G*, bei einer Temperatur von 23 °C, der sechsten Lage aus Polymermischung(en) (21) größer als 0,80 ist, wobei die Linearität als das Verhältnis von G*min zu G*max definiert ist, wobei
- G*min der Minimalwert des komplexen dynamischen Schermoduls G* bei einer Verformung von 1 bis 100 % ist und
- G*max der Maximalwert des komplexen dynamischen Schermoduls G* bei einer Verformung von 1 bis 100 % ist.

2. Reifen (1) nach Anspruch 1, **dadurch gekennzeichnet, dass** die fünfte Lage aus Polymermischung(en) (20), die sich axial zwischen dem umgeschlagenen Teil (7) der Karkassenbewehrungslage und der Versteifung (9) befindet, einen Elastizitätssekantenmodul bei 10 % Dehnung von größer als 6 MPa aufweist.

3. Reifen (1) nach einem der Ansprüche 1 oder 2, **dadurch gekennzeichnet, dass** die Polymermischung, die in einem Kreis (C), der auf das Ende (8) des umgeschlagenen Teils (7) der Karkassenbewehrung zentriert ist und einen Radius von mindestens 1,5 mm aufweist, vorhanden ist, einen Elastizitätssekantenmodul bei 10 % Dehnung von größer als 6 MPa aufweist.

4. Reifen (1) nach einem der vorhergehenden Ansprüche, **dadurch gekennzeichnet, dass** sich das radial äußerste Ende (10) der Versteifung (9) radial außerhalb des Endes (8) des umgeschlagenen Teils (7) der Karkassenbewehrungslage befindet.

5. Reifen (1) nach einem der vorhergehenden Ansprüche, **dadurch gekennzeichnet, dass** die Verstärkungselemente der Karkassenbewehrungslage (2) Korde mit mindestens zwei Lagen sind, wobei mindestens eine Innenlage von einer Lage umgeben ist, die aus einer nicht vernetzbaren, vernetzbaren oder vernetzten Kautschukmischung, vorzugsweise auf Basis mindestens eines Dien-Elastomers, besteht.

6. Reifen (1) nach einem der vorhergehenden Ansprüche, **dadurch gekennzeichnet, dass** der Reifen (1) in der gesamten Meridianebene in jedem Wulst (3) eine Rückhaltebewehrung, die den Wulstkern (4) umgibt, und ein Kautschukmischungsvolumen in direktem Kontakt mit dem Wulstkern (4) umfasst.

## Claims

1. Tyre (1), comprising a radial carcass reinforcement (2), made up of a carcass reinforcement layer formed of reinforcing elements, said tyre comprising a crown reinforcement (5), itself radially capped by a tread (6), said tread (6) being connected to two beads (3) by two sidewalls, the layer of reinforcing elements of the carcass reinforcement being anchored in each of the beads by being turned up around a bead wire (4) to form a main part of the carcass reinforcement layer extending from one bead wire (4) to the other, and a turn-up (7) of the carcass reinforcement layer (2) in each of the beads (3), said turn-up (7) of the carcass reinforcement being reinforced by at least one layer of reinforcing elements or a stiffener (9), a first layer of polymer compound(s) (11) being at least partially axially on the inside of the end (8) of said turn-up (7) of the carcass reinforcement layer, a second layer of polymer compound(s) (13) being at least partially axially on the outside of the radially outer end (10) of said stiffener (9), a third layer of polymer compound(s) (16) forming the outer surface of the tyre in the bead region (3), said third layer of polymer compound(s) (16) being intended in particular to come into contact with the rim, said third layer of polymer compound(s) (16) being radially outwardly in contact with a fourth layer of polymer compound(s) (18) forming the outer surface of a sidewall, the stiffener (9) being axially separated from the turn-up (7) of the carcass reinforcement layer by a fifth layer of polymer compound(s) (20), in a meridian cross section of said tyre
- a sixth layer of polymer compound(s) (21) takes up at least one zone radially on the inside of the end (8) of the turn-up (7) of the carcass reinforcement layer and radially on the outside of the bead wire (4), said zone being axially comprised between the turn-up (7) of the carcass reinforcement layer and the main part of the carcass reinforcement layer (2),
- the sixth layer of polymer compound(s) (21) is at a distance of at least 1.5 mm away from the end (8) of the turn-up (7) of the carcass reinforcement layer,
said tyre being **characterized in that** the maximum value of tan(δ), denoted tan(δ)max, measured at 60°C in accordance with the standard ASTM D 5992-96, of the sixth layer of polymer compound(s) (21) is less than 0.050 and **in that** the linearity of the complex dynamic shear modulus G*, at a temperature of 23°C, of the sixth layer of polymer compound(s) (21) is greater than 0.80, the linearity being defined by the ratio of G*min to G*max, with
- G*min being the minimum value of the complex dynamic shear modulus G* for a strain of 1 to 100%, and
- G*max being the maximum value of the complex dynamic shear modulus G* for a strain of 1 to 100%.

2. Tyre (1) according to Claim 1, **characterized in that** the fifth layer of polymer compound(s) (20) located axially between the turn-up (7) of the carcass reinforcement layer and the stiffener (9) has a secant modulus of elasticity at 10% elongation greater than 6 MPa.

3. Tyre (1) according to either of Claims 1 and 2, **characterized in that** the polymer compound present in a circle (C) centred on the end (8) of the turn-up (7) of the carcass reinforcement and having a radius of at least 1.5 mm has a secant modulus of elasticity at 10% elongation greater than 6 MPa.

4. Tyre (1) according to one of the preceding claims, **characterized in that** the radially outermost end (10) of the stiffener (9) is radially on the outside of the end (8) of the turn-up (7) of the carcass reinforcement layer.

5. Tyre (1) according to one of the preceding claims, **characterized in that** the reinforcing elements of the carcass reinforcement layer (2) are cords having at least two layers, at least one internal layer being sheathed with a layer made of a rubber composition that is not crosslinkable, is crosslinkable or is crosslinked, preferably based on at least one diene elastomer.

6. Tyre (1) according to one of the preceding claims, **characterized in that**, in every meridian plane, in each bead (3), the tyre (1) has a retention reinforcement surrounding the bead wire (4) and a volume of rubber compound in direct contact with the bead wire (4).
